# EUROPEAN PATENT APPLICATION

(11) **EP 3 581 440 A1**
(43) Date of publication of application: **18.12.2019**
(21) Application number: 18177078.5
(22) Date of filing: 11.06.2018
(51) Int. Cl.: B60R 21/015

(54) **METHOD AND SYSTEM FOR CONTROLLING A STATE OF AN OCCUPANT PROTECTION FEATURE FOR A VEHICLE**

(71) Applicant: Volvo Car Corporation, 40 531 Göteborg (SE)
(72) Inventor: Koppisetty, Ashok Chaitanya, 413 26 GÖTEBORG (SE); Petersson, Max, 417 19 GÖTEBORG (SE)
(74) Representative: Kransell & Wennborg KB

(57) **Abstract**

The present invention relates to a method for adapting an occupant protection feature (302, 304, 306) of a vehicle. Receiving (S102) sensor data from at least two sensors (402, 204, 206), the sensor data is indicative of a detected occupant (102,108,110) in the vehicle. Constructing (S104) a model of a seating position of the detected occupant in the vehicle based on the sensor data. Adapting (S106) the occupant protection feature based on the modelled occupant's seating position.

## Description

### Field of the Invention

The present invention relates to a method and a safety system for controlling a state of an occupant protection feature of a vehicle.

### Background of the Invention

Safety in the automotive industry is of high importance both with respect to vehicle-pedestrian impacts and vehicle-vehicle impact. Most modern vehicles today have relatively advanced restraint systems including airbags for protection of occupants of the vehicle, and external sensors on the vehicle to provide collision warnings or even automatic braking in case of a predicted collision.

Apart from electronic restraint systems, the structure of the vehicle itself may also be particularly designed to behave in a predetermined way in case of an impact with a foreign object or a pedestrian. This applies for example to the hood of the vehicle and to other front structures of the vehicle which often have e.g. collapsible crash beams.

Restraint systems for vehicles should also take into account for the location and posture of the occupant's of the vehicle. This is often the case for air bags which in many modern vehicles are even found as side airbags in the vehicle doors, or in some cases in the vehicle ceiling. US2015084315 discloses one example of an airbag system in which the airbag comprises several zones for covering different parts of the occupant in the deployed state of the air bag.

However, the occupant's posture may change considerably when travelling in the vehicle and the efficiency of restraint systems may be largely affected by the occupant's posture, and may in some cases even cause injuries rather than protecting the occupant in the event of a crash. Further, due to the changing posture of occupant's in the vehicle, other systems than restraint systems of the vehicle may also contribute to the safety of the occupant.

Accordingly, there is a need for improving the safety for occupants travelling in vehicles.

### Summary

In view of above, it is an object of the present invention to provide improved protection for occupants in vehicles that is adaptable with regard to the seating position of the occupants.

According to a first aspect of the invention, there is provided a method for adapting an occupant protection feature of a vehicle, the method comprising: receiving sensor data from at least two sensors, the sensor data is indicative of a detected occupant in the vehicle; constructing a model of a seating position of the detected occupant in the vehicle based on the sensor data; and adapting the occupant protection feature based on the model seating position.

The present invention is based on the realization that the occupant's seating position affects the occupant protection need, and therefore it was realized that by determining the occupant's seating position, protection features of the vehicle may be adapted to that seating position.

A protection feature may refer to functions and devices directly responsible for the occupant's protection but also to functions and devices not directly related to the occupant's protection but that at least partly affect the occupant's safety, or contribute to the occupant's protection.

The sensor data from the sensors are fused to construct the model of the seating position of the detected occupants. The at least two sensors may be of two different types.

The model is a software based electronic model of the seating position. The model may comprise a set of seating parameters.

A protection feature of the vehicle may be caused to be in one of an at least partly active or an at least partly in-active state depending on the seating position of the occupant.

Accordingly, in embodiments, the occupant protection feature may be transitioned, based on the modelled occupant's seating position, from one of an at least partly active state and an at last partly in-active state to the other one of the at least partly active state and the at least partly in-active state.

According to embodiments, a vehicle status signal may be received comprising information of a driving safety state of the vehicle, the model of the occupant's seating position may be evaluated with regards to the driving safety state of the vehicle; and the occupant protection feature may be adapted based on the outcome of the evaluation.

A vehicle status signal may comprise information regarding at least one of: a probability of the vehicle to be subject to an accident, a detected collision, the vehicle speed, braking actions, steering actions, etc. any of which may affect the driving safety state of the vehicle. The occupant protection feature may be adapted based on occupant seating positions that are concluded to cause a hazardous situation for the occupant with regards to the driving safety state.

In embodiments, the model may comprise seating parameters indicative of positions of an occupant's body parts in relation to each other. The seating parameters may thereby provide detailed information about the body posture of the occupant. The body posture is important with regards to occupant safety and may therefore provide valuable information for improving the adaptation of the occupant protection feature.

In embodiments, the model comprises seating parameters indicative of positions of an occupant's body parts in relation to vehicle interior parts. The position of the occupant and his/her body parts in the vehicle affects the safety of the occupant and therefore also provide valuable information for improving the adaptation of the occupant protection feature.

The model may additionally comprise parameters indicative of positions of objects located in the vehicle. The position of an object in the vehicle may affect the safety of the occupant and therefore also provide valuable information for improving the adaptation of the occupants protection feature. For example, the object may be a book, a laptop, a tablet, a toy, etc.

The model may advantageously be constructed by a machine learning algorithm. A machine learning algorithm may be taught to identify and construct a large amount of seating positions or hazardous objects based on sensor data.

The machine learning algorithm may be a supervised learning algorithm. Alternatively, the machine learning algorithm may be an unsupervised learning algorithm.

The at least two sensors may comprise a sound sensor and a light sensitive sensor.

The at least two sensors may comprise at least one LIDAR sensor. A light based sensor capable of capturing 3D information may be a LIDAR. The model may be constructed using 3D point clouds generated from sensor data such as LIDAR data combined with data from sensors such as RGB cameras and motion detection sensors.

Further, the at least two sensors may comprise at least one illuminated time of flight sensor. Accordingly, the model may be constructed using 3D point clouds generated from sensor data such as illuminated time of flight sensor data combined with data from sensors such as RGB cameras and motion detection sensors.

According to a second aspect of the invention, there is provided a safety system for controlling a state of an occupant protection feature of a vehicle, the system comprises: at least two sensors configured to detect an occupant in the vehicle and to provide sensor data indicative of the detected occupant; a vehicle control unit configured to: construct a model of the detected occupant's seating position in the vehicle based on the sensor data; and provide an instruction signal for adapting the occupant protection feature based on the model seating position.

In embodiments, the vehicle control unit may be configured to: receive a vehicle status signal comprising information of a driving safety state of the vehicle; evaluate the model of the occupant's seating position with regards to the driving safety state of the vehicle; and provide the instruction signal for adapting the occupant protection feature based on the outcome of the evaluation.

In embodiments, the occupant protection feature comprises at least one airbag unit, wherein the airbag unit is adaptable to be in an inflatable state or to be in a non-inflatable state. Thus, depending on the modelled occupant's seating position one or more airbag units may be transitioned to an at least partly in-active state or to an at least partly active state. In the at least partly in-active state may the airbag unit be powered off, or at least controlled to not be inflated even in the event of a crash. In the at least partly active state may the airbag unit be in a normal operation mode.

In embodiments, the occupant protection feature may comprise a vehicle seat position, wherein the vehicle seat position is configured to be adjusted based on the occupant's modelled seating position. Accordingly, the seat position may be adjusted such that it provides a safer position for the occupant based on the modelled seating position of the occupant.

In embodiments, the occupant protection feature may comprise an information or warning system, wherein the occupants are alerted through visual, auditory or vibrational means about a potentially dangerous seating position or an object placed in potentially dangerous position in the vehicle interior. Accordingly, the occupant may advantageously be alerted about a dangerous seating position.

This second aspect of the invention provides similar advantages as discussed above in relation to the previous aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing example embodiments of the invention, wherein:
Fig. 1a-g conceptually illustrates exemplary occupant seating positions;
Fig. 2 conceptually illustrates an exemplary vehicle safety system in a vehicle according to embodiments;
Fig. 3a conceptually illustrates an exemplary vehicle safety system in a vehicle according to embodiments;
Fig. 3b is a box diagram of an exemplary vehicle safety system according to embodiments;
Fig. 4 conceptually illustrates collection and processing of the sensor data;
Fig. 5 illustrates a conceptual example 3D point cloud of an occupant in a vehicle;
Fig. 6 conceptually illustrates a machine learning algorithm;
Fig. 7 conceptually illustrates a convolutional neural network;
Fig. 8 is a flow chart of method steps according to embodiments of the invention; and
Fig. 9 is a flow chart of method steps according to embodiments of the invention.

### Detailed Description of Example Embodiments

In the present detailed description, various embodiments of the system and method according to the present invention are mainly described with reference to a vehicle in the form of a car. However, the present invention is equally well applicable to other vehicles such as trucks and busses, etc. Thus, this invention may generally be embodied in many different forms and should not be construed as limited to the embodiments set forth herein; rather, these embodiments are provided for thoroughness and completeness, and fully convey the scope of the invention to the skilled person. Like reference characters refer to like elements throughout.

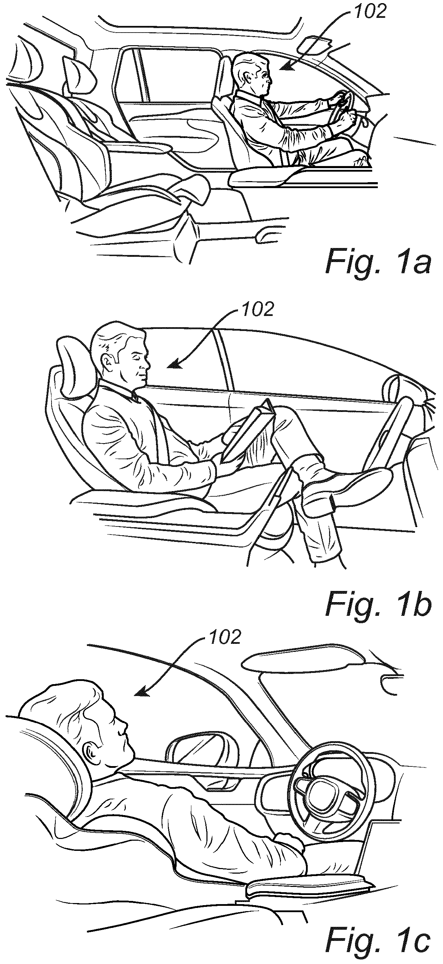

Fig. 1a-g illustrates several exemplary occupant seating positions for the purpose of exemplifying a least some occupant seating positions among many possible seating positions.

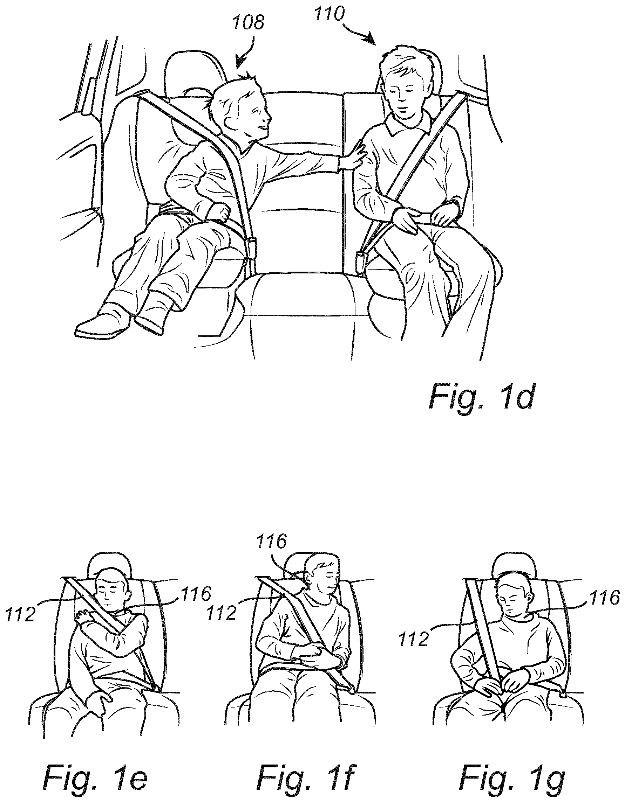

In fig. 1 a is a driver 102 of a vehicle seated in a neutral driving seating position. Figs. 1b-c relate to occupant seating position which may be enabled by the introduction of autonomous vehicles on the market. Thus, when the occupant 102 in the previously dedicated driver's seat no longer has to manually drive the vehicle, reading positions (fig. 1b) with one leg on the other knee or even seating positions lying down (fig. 1c) are possible even in the driver's seat. The seating positions shown figs. 1b-c are of course possible for other occupants of the vehicle than the driver, even in the case of manually driven vehicles.

Fig. 1d illustrates two difference seating positions in the rear seat of a vehicle. One occupant 108 is in the seating position reaching over to the side towards a second occupant 110 which is seated in a more upright seating position.

Figs. 1e-g illustrates further occupant seating positons each with a different seat belt 112 position. In fig. 1e the occupant 166 has the seat belt relatively close to the neck and with one arm on the opposite shoulder. In fig. 1f is the occupant reaching somewhat sideways forward with the seat belt in a lower position on the shoulder. In fig. 1g the occupant 116 seated lower in the vehicle seat with the seat belt relatively low on the shoulder.

Each of the occupant positions illustrated in figs 1a-g represents a different relative position between the occupant's body parts. The body parts may for example be the torso, the head, the neck, the legs, etc. Further, the seating positions may be defined by measurements such as positions of the head from the neck rest, position of the belt on the body, position of the hips and thighs, inclination angle of body parts (e.g. the torso) with respect to the vehicles geometry, and generally the location of occupant's body in safety and ergonomically sensitive positions.

A safety system in accordance with the inventive concept is configured to detect and model the seating position of the occupant.

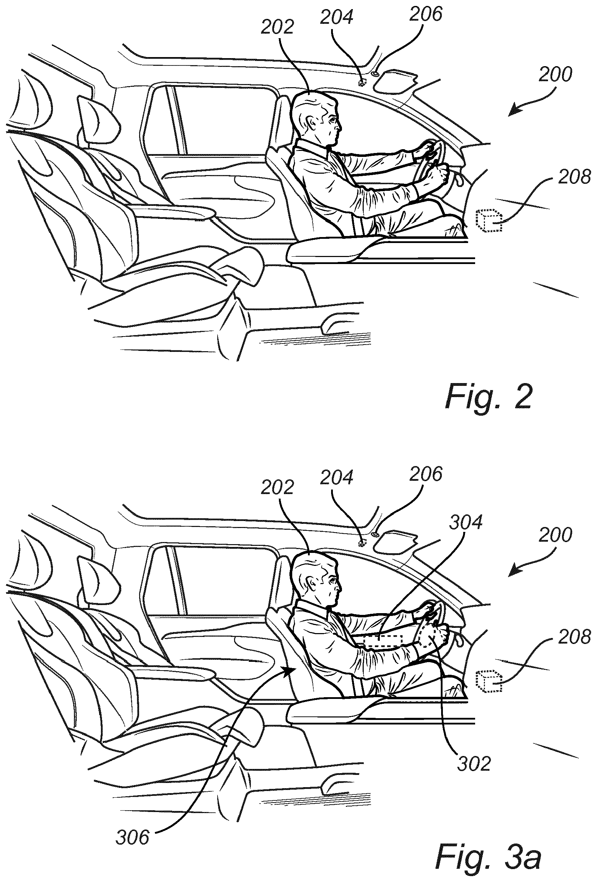

Fig. 2 schematically illustrates a safety system 200 that comprises at least two sensors 204 and 206. The sensors are configured to detect an occupant 202 in the vehicle. The sensors may for example comprise one LIDAR 204 and one camera 206 (e.g. RGB camera). Further exemplary sensors comprise motions sensor which may compliment the LIDAR 204 and camera 206, or replace one of the LIDAR 204 and the camera 206.

The sensor data collected by the LIDAR 204 and the camera 206 is provided to the conceptually shown vehicle control unit 208. The vehicle control unit 208 constructs a model of the occupant's 202 seating position based on the sensor data. Based on an evaluation of the modelled occupant's seating position the vehicle control unit 208 provides an instruction signal for adapting an occupant protection feature. Thus, depending on the seating position (see e.g. the seating positions in figs 1a-g), the occupant protection feature may be adapted to better suit the occupant seating position.

In some embodiments, the vehicle control unit 208 may receive a vehicle status signal which indicates a driving safety state of the vehicle. The driving safety state may indicate at least one of a present probability that the vehicle will be subject to an accident, a detected collision, the vehicle speed, braking actions, steering actions, etc. any of which may affect the driving safety state of the vehicle. The vehicle status signal may be received from vehicles internal control units associated with the respective vehicle function (e.g. active safety systems, propulsion systems, steering systems, restraint systems etc.)

Fig. 3a illustrates the occupant 202 in fig. 2 and the safety system 200, now illustrating occupant protection features in the form of side airbag 304 and front airbag 302, in addition to a vehicle seat 306 with an electronically controllable seating position.

For example, if a collision is detected and the occupant is in a seating position not suitable for one or more airbags 302, 304 then the one or more air bags 302, 304 may be deactivated such that it does not inflate despite the detected collision. In this way, the airbags are prevented from injuring the occupant which may otherwise be the case for some unsuitable seating positions. For example, an occupant in a seating position with his/her head leaning against the location of the side airbag 304 may cause that airbag 304 to be deactivated so that the occupant is not injured in case of airbag inflation.

Furthermore, if a seating position indicates an occupant in a lying down seating position, and the vehicle status signal indicates steering at a relatively high yaw rate and high speed, then the vehicle seat 306 may be adjusted such that the occupant do not risk falling to the side of the vehicle seat to a potentially harmful position.

In addition, the occupant protection feature may further comprise an alert system. Such an alert system may for example be configured to provide an audio alert signal via load speakers of the vehicle in response to a detected hazardous seating position. In other possible implementations, the alert system is configured to provide a visual alert signal via a display screen or light emitting devices in the vehicle in response to a detected hazardous seating position. A haptic (vibrational) alert signal may be provided in other possible implementations. The alert signal(s) may be provided not only in the case of a detected hazardous seating position but also in response to a detected object placed in potentially hazardous position for the occupant in the vehicle interior.

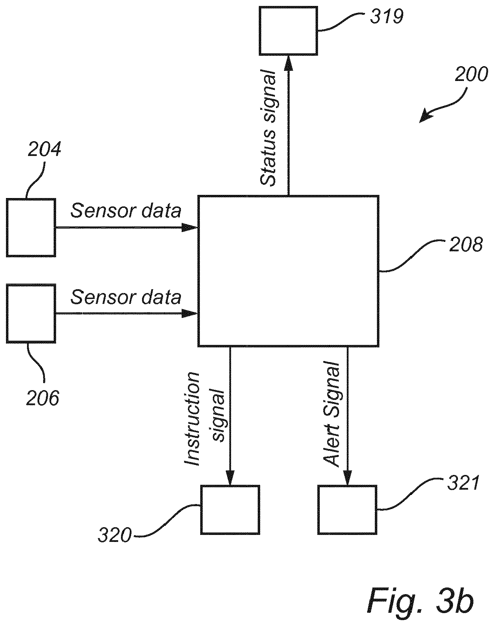

Fig. 3b shows a box diagram of a safety system 200 according to embodiments of the invention. The system comprises two sensors 204 and 206 which are configured to detect an occupant in a vehicle. The sensors 204, 206 are configured to provide sensor data indicative of the detected occupant to a vehicle control unit 208. The vehicle control unit 208 constructs a model of the detected occupant's seating position based on the sensor data using methods described with reference to subsequent drawings. The control unit 208 provides an instruction signal for adapting an occupant protection feature 320 (as described above with reference to fig. 3a) based on the modelled seating position.

In addition, in some embodiments, the vehicle control unit 208 receives a vehicle status signal comprising information of a driving safety state of the vehicle. The vehicle status signal may be received from the vehicle's internal control units 319 associated with the respective vehicle function (e.g. active safety systems, propulsion systems, steering systems, restraint systems etc.) The vehicle control unit 208 evaluates the model of the seating position together with the driving safety state of the vehicle and provides the instruction signal for adapting the occupant protection feature 320 based on the outcome of the evaluation.

In yet another embodiment, the occupant protection feature comprises an alert system 321. The alert system 321 is configured to provide an audio alert, a haptic alert, or a visual alert signal (or combinations thereof) to the occupant of the vehicle in response to a detected hazardous seating position or in response to a detected object placed in potentially hazardous position for the occupant in the vehicle interior. The alert signal provides information to the occupant about the hazardous seating position or the detected object placed in potentially hazardous position for the occupant.

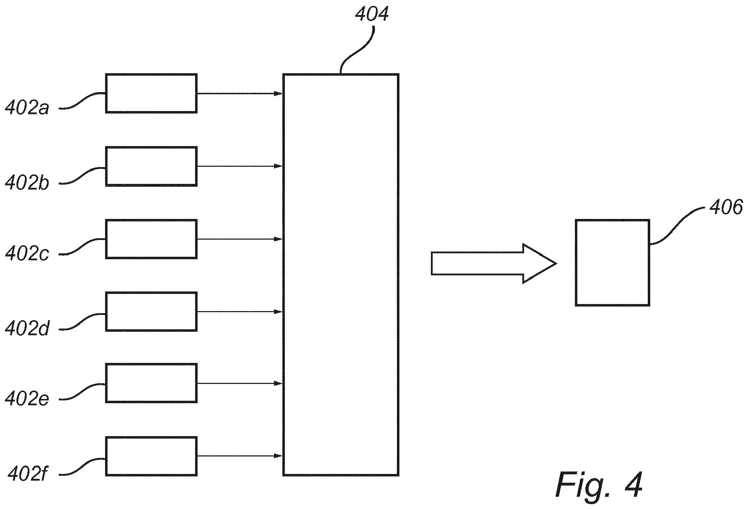

Fig. 4 conceptually illustrates the collection and processing of the sensor data. A plurality of sensors 402a-f is each configured to collect data indicative of the presence of an occupant in a vehicle. The sensors 402a-f may include LIDAR, a microphone, an RGB camera, an infrared camera, a seat weight sensor, a car seat position sensor, a seatbelt sensor, and motion detectors, etc. The sensors 402a-f may also detect objects located in the vehicle and the vehicle interior parts. Note that there may be more sensors than the depicted 402a-f or fewer sensors as long as there are at least two sensors.

The data from the sensors are fused in a machine learning algorithm 404. The machine learning algorithm has been taught to construct models 406 for recognizing seating positions and extract seating parameters, and to construct models of objects in the vehicle, or the vehicle interior parts. For instance, seating parameters may relate to the position of the occupant's torso in relation to vehicle parts, e.g. interior parts of the vehicle, air bags, seat belt, windows, neck rests, etc.

Furthermore, the seating parameters may relate to the position of the head from the neck rest, position of the belt on the body, position of the hips and thighs, inclination angle with respect to the vehicles geometry, location of occupants body in safety and ergonomically sensitive positions.

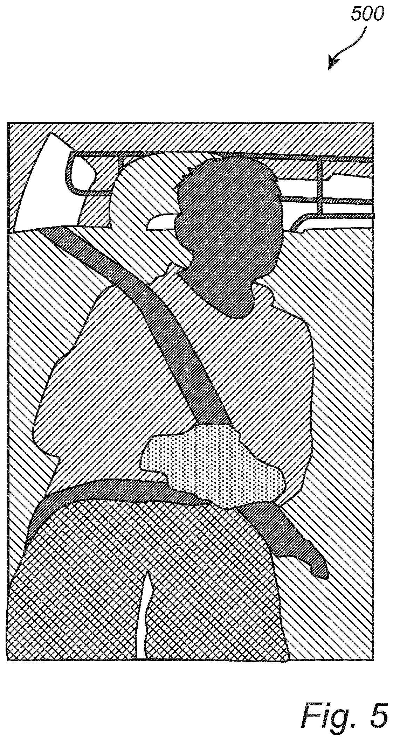

A LIDAR (light detection and ranging) may be used for creating a 3D point cloud of the interior of the vehicle including the occupant as is conceptually illustrated in Fig. 5 showing a conceptual 3D point cloud representation 500 of the fig. 1f. Generally, a point cloud is a set of data point in a coordinate system. In a 3D coordinate system, the points are intended to represent the external surface of an object, as detected by a LIDAR. Thus, a 3D point cloud of the occupant in the vehicle represents the external surface of the occupant and the vehicle interior. From such a 3D point cloud, it is possible to determine seating parameters and to detect the occupant's seating position.

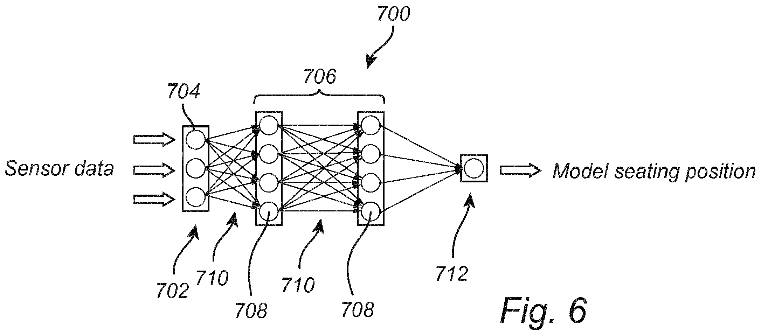

Fig. 6 illustrates a possible approach of implementing a machine learning algorithm for constructing a model of a seating position of the detected occupant.

The block diagram comprises an input layer 702, configured to receive input data to the machine learning algorithm. The input data includes sensor data from at least two sensors. The sensor data is indicative of a detected occupant in the vehicle. The input layer includes a node 704 associated with each input.

The machine learning algorithm 700 also includes one or more convolutional layers, and optional recurrent or recursive layers in block 706. A machine learning algorithm based on recurrent layers take current data from the input layer 702 as an input in addition to previously processed data. In other words, recurrent layers are advantageously used for capturing the history of the input data.

Nodes 704 of the input layer 702 communicate with the nodes 708 of the layers 706 via connections 710. The connections 710 and weights of the connections are determined during training sessions such as supervised training sessions.

A model of an occupant's seating position is provided in the output layer 712.

It should be noted that the number of connections and nodes for each layer may vary, fig. 6 is only provided as an example. Accordingly, in some machine learning network designs more than the indicated layers in fig. 6 may be used.

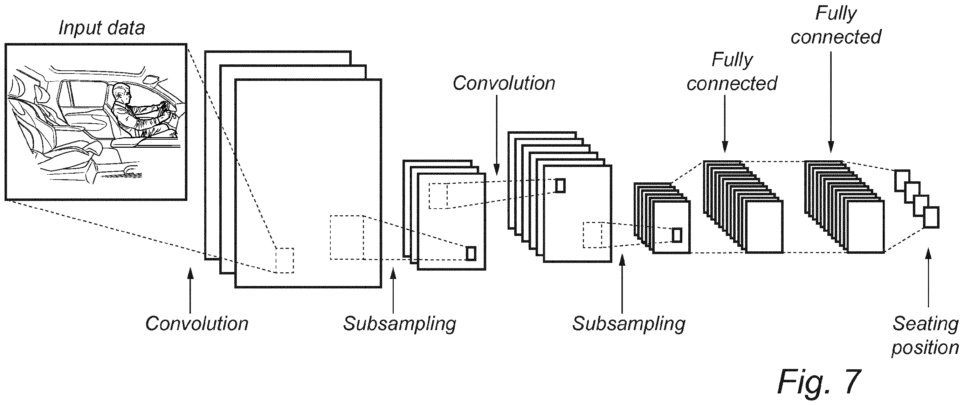

Fig. 7 conceptually illustrates a convolutional neural network in line for possible use with the inventive concept, for example combined with the illustrated neural network in fig. 6. In a convolutional neural network, as is known to the skilled person, convolutions of the input layer are used to compute the output. Local connections are formed such that each part of the input layer is connected to a node in the output. Each layer applies filters whereby the parameters of the filters are learned during training phases for the neural network.

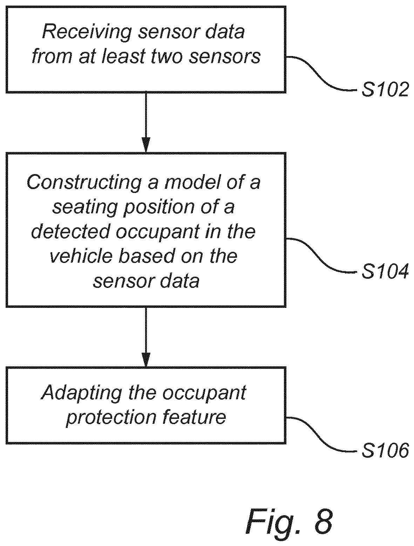

Fig. 8 is a flow chart of method steps according to embodiments. Sensor data is received in step S102 from at least two sensors, the sensor data is indicative of a detected occupant in the vehicle. Next, in step S104, constructing a model of a seating position of the detected occupant in the vehicle based on the sensor data. An occupant protection feature is adapted in step S106 based on the modelled occupant's seating position.

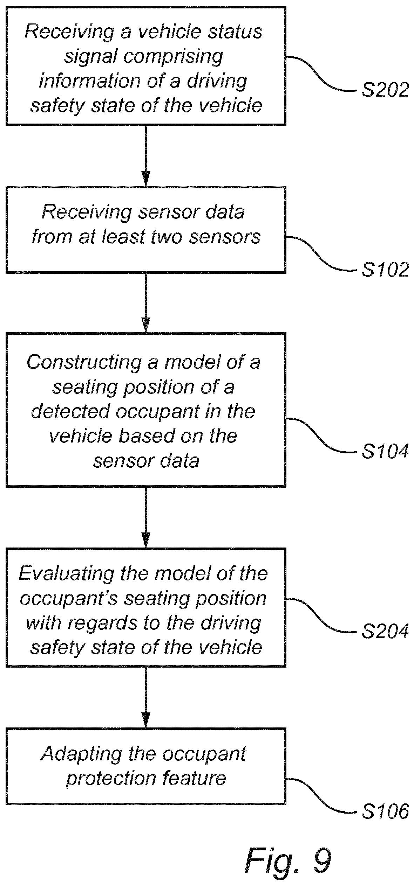

Fig. 9 is a flow chart of method steps according to embodiments. In addition to the steps (S102, S104, S106) described with reference to fig. 8, steps S202 and S204 are included. According to step S202, a vehicle status signal comprising information of a driving safety state of the vehicle is received. Further, subsequently to receiving sensor data in step S102 and constructing the model of a seating position in step S104, the model of the occupant's seating position is evaluated in step S204 with regards to the driving safety state of the vehicle. Based on the outcome of the evaluation may the occupant protection feature be adapted in step S106.

The control functionality of the present disclosure may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions.

Although the figures may show a sequence the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

The person skilled in the art realizes that the present invention by no means is limited to the preferred embodiments described above. On the contrary, many modifications and variations are possible within the scope of the appended claims.

It should be understood that the depicted occupants 102, 108, 110, 116, 202 serve as example occupants with regards to body size and shape.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A method for adapting an occupant protection feature (302, 304, 306) of a vehicle, the method comprising:
- receiving (S102) sensor data from at least two sensors (402, 204, 206), the sensor data is indicative of a detected occupant (102,108,110) in the vehicle;
- constructing (S104) a model of a seating position of the detected occupant in the vehicle based on the sensor data; and
- adapting (S106) the occupant protection feature based on the model seating position.

2. The method according to claim, comprising:
- receiving (S202) a vehicle status signal comprising information of a driving safety state of the vehicle;
- evaluating (S204) the model of the occupant's seating position with regards to the driving safety state of the vehicle; and
- adapting the occupant protection feature based on the outcome of the evaluation.

3. The method according to any one of claims 1 or 2, wherein the model comprises seating parameters indicative of positions of an occupant's body parts in relation to each other.

4. The method according to any one of the preceding claims, wherein the model comprises seating parameters indicative of positions of an occupant's body parts in relation to vehicle interior parts.

5. The method according to any one of the preceding claims, wherein the model is constructed by a machine learning algorithm (700).

6. The method according to claim 5, wherein the machine learning algorithm is a supervised learning algorithm or unsupervised learning algorithm.

7. The method according to any one of the preceding claims, wherein the at least two sensors comprises a sound sensor and a light sensitive sensor.

8. The method according to any one of the preceding claims, wherein the at least two sensors comprises at least one light based sensor capable of capturing three-dimensional information.

9. The method according to any one of the preceding claims, wherein adapting the occupant protection feature comprises:
- transitioning, based on the modelled occupant's seating position, a state of the occupant protection feature from one of an at least partly active state and an at last partly in-active state to the other one of the at least partly active state and the at least partly in-active state.

10. A safety system (200) for controlling a state of an occupant protection feature (302, 304, 306) of a vehicle, the system comprises:
- at least two sensors (204, 206) configured to detect an occupant (202) in the vehicle and to provide sensor data indicative of the detected occupant; and
- a vehicle control unit (208) configured to:
construct a model of the detected occupant's seating position in the vehicle based on the sensor data; and
provide an instruction signal for adapting the occupant protection feature based on the model seating position.

11. The safety system according to claim 10, wherein the vehicle control unit is configured to:
- receive a vehicle status signal comprising information of a driving safety state of the vehicle;
- evaluate the model of the occupant's seating position with regards to the driving safety state of the vehicle; and
- provide the instruction signal for adapting the occupant protection feature based on the outcome of the evaluation.

12. The safety system according to any one of claim 10 or 11, wherein the occupant protection feature comprises at least one airbag unit, wherein the airbag unit is adaptable to be in an inflatable state or to be in an non-inflatable state.

13. The safety system according to any one of claims 10 to 12, wherein the occupant protection feature comprises a vehicle seat position, wherein the vehicle seat position is configured to be adjusted based on the occupant's modelled seating position.

14. The safety system according to any one of claims, wherein the occupant protection feature comprises an alert system (321) configured to:
provide an alert signal through visual, auditory or vibrational means in response to a detected hazardous seating position or in response to a detected object placed in hazardous position for the occupant in the vehicle interior.

15. The safety system according to any one of claim 10 to 14, wherein the at least two sensors comprises at least one motion sensor.
